# EUROPÄISCHE PATENTANMELDUNG

(11) **EP 3 330 228 A1**
(43) Veröffentlichungstag der Anmeldung: **06.06.2018**
(21) Anmeldenummer: 17204783.9
(22) Anmeldetag: 30.11.2017
(51) Int. Cl.: C02F 1/00, C02F 1/32, C02F 1/465, C02F 1/28, C02F 1/461, C02F 103/16

(54) **VERFAHREN ZUR HERSTELLUNG VON BIOGAS UND ZUR WASSERAUFBEREITUNG**

(30) Priorität: 01.12.2016 DE 102016123184
(71) Anmelder: Baumann, Dieter, 72474 Winterlingen-Benzingen (DE)
(72) Erfinder: Baumann, Dieter, 72474 Winterlingen-Benzingen (DE)
(74) Vertreter: Otten, Roth, Dobler & Partner mbB Patentanwälte

(57) **Zusammenfassung**

Vorgeschlagen wird ein verbessertes Verfahren zur Herstellung von Biogas und zur Wasseraufbereitung, wobei die folgenden Verfahrensstufen durchlaufen werden:
eine erste Stufe, bei der an der aufzubereitenden Flüssigkeit eine Elektrolyse (2) mit elektrochemischer Oxidation wasserlöslicher, abzusondernder Bestanteile und zur Erzeugung von Flotationsgasen durchgeführt wird,
eine sich an die erste Stufe anschließende zweite Stufe, bei der eine Filterung (6, 7, 8, SF, BF) zur Absonderung ausgeflockter und/oder unlöslicher Bestandteile, insbesondere edelmetallhaltiger Bestandteile durchgeführt wird,
eine sich an die zweite Stufe anschließende dritte Stufe, bei der eine Bestrahlung mit ultraviolettem Licht (30) zur Desinfektion mit einer Partikelfilterung durchgeführt wird.

## Beschreibung

Die Erfindung betrifft ein Verfahren zur Herstellung von Biogas sowie eine Verwendung des Verfahrens der Herstellung von Biogas zur Aufbereitung von Wasser.

Aus dem Stand der Technik sind zahlreiche Methoden zur Wasseraufbereitung bekannt. Diese Maßnahmen umfassen insbesondere die Entfernung von Stoffen aus dem Wasser durch Reinigung, Entkeimung, Enthärtung usw. sowie gegebenenfalls die Ergänzung von Stoffen zum Einstellen von Parametern, insbesondere zahlreiche Filtrationsverfahren. Als Biofilter werden beispielsweise Aktivkohlefilter eingesetzt, die über Adsorptionsprozesse arbeiten. In großen Kläranlagen werden zum Beispiel zur Filtration von Schwebeteilchen Sandfilter eingesetzt.

Aufgabe der Erfindung ist es, ein möglichst flexibles Verfahren zur Herstellung von Biogas beziehungsweise ein verbessertes Verfahren zur Wasseraufbereitung bereitstellen zu können, bei dem auch extrem verschmutztes Ausgangswasser in Brauch- bzw. Trinkwasser umgewandelt werden kann.

Die Aufgabe wird, ausgehend von einem Verfahren der eingangs genannten Art, durch die Merkmale der Ansprüche 1 beziehungsweise 14 gelöst.

Durch die in den abhängigen Ansprüchen genannten Maßnahmen sind vorteilhafte Ausführungen und Weiterbildungen der Erfindung möglich.

Das erfindungsgemäße Verfahren kann gleichzeitig zur Herstellung von Biogas und zur Wasseraufbereitung dienen, wobei als Ausgangsflüssigkeit eine aufzubereitende, wasserhaltige Flüssigkeit aus gewerblichen Abwässern beziehungsweise aus Rückständen einer Altlastsanierung verwendet wird. Insbesondere kann beispielsweise auch Gülle aus der Landwirtschaft verwendet werden.

Das erfindungsgemäße Verfahren umfasst zunächst drei Stufen:
In Stufe 1 wird in der aufzubereitenden Flüssigkeit eine Elektrolyse mit elektrochemischer Oxidation wasserunlöslicher, abzusondernder Bestandteile vorgenommen. Dabei entstehen Flotationsgase, sodass in besonders vorteilhafter Weise diese Flotationsgase beziehungsweise die Gasblasen sich an Partikeloberflächen, vor allem an hydrophoben Oberflächen, anlagern können; dieser Effekt (Flotation) sorgt dafür, dass eine höhere Auftriebskraft auf die Partikel wirkt und diese somit abgesondert werden können.

Oxidierbare Substanzen und Anteile des durch die Elektrolyse entstehenden Wasserstoffs können sehr intensiv oxidiert werden, sie wirken also als Reduktionsmittel. Diese vorgelösten Bestandteile im Wasser können aneinander gebunden werden und als wasserunlösliche Bestandteile ausflocken. Auch dieses Ausflocken wiederum kann in vorteilhafter Weise für einen Reinigungseffekt genutzt werden, da dieser selbst wiederum wasserunlösliche Bestandteile einbetten kann. Auf diese Weise können die herauszufilternden Stoffe sehr einfach abfiltriert werden, weil sie einen Überstand bilden, wenn sie aufgrund ihres Auftriebs an der Oberfläche schwimmen und so als getrennte Phase abgeschöpft werden können; ebenfalls können ausgeflockte Bestandteile, die sich aufgrund ihrer höheren Dichte nicht an der Oberfläche ansammeln, etwa auf den Boden wandern oder sonst in der Flüssigkeit schwimmen, durch einfache mechanische Filtrierung herausgelöst werden.

Durch diese Methode können grundsätzlich alle Arten organischer oder anorganischer Belastungen aus der wasserhaltigen Flüssigkeit entfernt werden, insbesondere auch Salze. Zudem sorgt der Elektrolyse-Prozess dafür, dass im Übrigen auch Krankheitserreger, wie zum Beispiel Legionellen-Bakterien, abgetötet werden. Der Einsatz zusätzlicher Chemikalien, insbesondere von Flockungsmitteln, kann eingespart werden.

Die zweite Stufe sieht sodann vor, eine Filtrierung der bereits ausgesonderten Bestandteile durchzuführen, also insbesondere der als Überstand vorhandenen Stoffe beziehungsweise der durch Ausflockung erhaltenen Bestandteile. Ferner können durch diese Filtrierung auch edelmetallhaltige Bestandteile ausgesondert werden. Sind die abzusondernden Stoffe bereits als feste oder weiche Bestandteile abgetrennt, können sie somit durch mechanische Filter von der flüssigen Phase getrennt werden. Da diese Bestandteile oftmals auch den elektrischen Widerstand des aufzubereitenden Wassers bestimmen, kann die Leitfähigkeit über mehrere Filterstufen eingestellt werden. Unter anderem hängt dies von der Verwendung des gewonnen Wassers ab, weil für Trinkwasser der Leitwert des Wasser nicht so stark herabgesetzt werden muss wie zum Beispiel für hochreines Wasser für Laboranwendungen.

In einer dritten Stufe kann zur Entkeimung eine Bestrahlung mit ultraviolettem Licht (UV-Licht) zur Desinfektion/Entkeimung durchgeführt werden. Auf diese Weise können insbesondere biologische Keime abgetötet werden. Zusätzlich kann eine Partikelfilterung vorgenommen werden. Durch die Partikelfilterung können zusätzliche Bestandteile mechanisch herausgelöst werden.

Bei dem Verfahren kann zum einen Biogas hergestellt werden, weil die elektrochemisch gebildeten Gase aus der Elektrolyse als Biogas zur Verfügung stehen können. Darüber hinaus kann das Verfahren gleichzeitig zur Wasseraufbereitung genutzt werden, weil das Ausgangsmaterial auch gereinigt wird, bis in beliebiger Form Wasser zur Verfügung steht.

Bei einem vorteilhaften Ausführungsbeispiel der Erfindung kann bei der elektrochemischen Oxidation wenigstens eine bohrdotierte Diamantelektrode verwendet werden. Durch die Verwendung derartiger Elektroden können hochreaktive OHRadikale (Hydroxylradikale) bei der Elektrolyse erzeugt werden. Derartige Elektroden umfassen ein Halbleitermaterial, etwa Silizium, sowie regelmäßig eine polykristalline Diamantschicht als Überzug. Zur Erhöhung der Leitfähigkeit ist die Diamantschicht mit Bor dotiert. Der Grundkörper besteht aus einem leitenden Material, insbesondere einem Metall. Denkbar sind jedoch auch andere Ausführungsformen, bei denen Diamantbestandteile in einen entsprechenden Grundkörper eingebracht werden. Die OH⁻-Radikale können die desinfizierende Wirkung des Prozesses verstärken. Diamantelektroden bieten grundsätzlich die größte Überspannung für die Elektrolyse von Wasser, sodass hohe Stromausbeuten für die Erzeugung von Oxidationsmitteln möglich sind und darüber hinaus, wie bereits erwähnt, OH⁻-Radikale aus dem Wasser gebildet werden können.

Wie bereits erwähnt, kann in vorteilhafter Weise die elektrochemische Oxidation zur Ausflockung abzusondernder Bestandteile verwendet werden. Die Flocken können in vorteilhafter weise größere Konglomerate bilden, die durch Filterung einfach abzutrennen sind.

Zur Verringerung der Wartungsanfälligkeit kann insbesondere bei der zweiten Stufe ein wenigstens teilweise selbstreinigender Filter (AV-Filter) zur Filterung verwendet werden. Auch kann hierdurch eine besonders effektive Filtrierung erreicht werden. Auf diese Weise muss der Betrieb einer entsprechenden Anlage nicht ständig für Wartungsarbeiten, bei denen z.B. ein Filter zu reinigen wäre, unterbrochen werden; folglich kann die Standzeit erhöht werden. Auch die Wartungskosten und Kosten für die entsprechenden Filtereinrichtungen können damit gesenkt werden.

In der zweiten Filterstufe können unter anderem alle als Überstand vorhandenen oder ausgeflockten Bestandteile herausgefiltert werden. Auch sonstige Partikel gewisser Korngröße können auf mechanischem Weg gefiltert werden, auch dann, wenn sie noch nicht als separierte Phase vorliegen.

Darüber hinaus ist zu rechnen, dass sowohl die ausgeflockten Bestandteile als auch der Überstand als auch sonstige in der Flüssigkeit vorhandene Partikel unterschiedliche Größen aufweisen und somit mehr oder weniger einfach herausgefiltert werden können. Dementsprechend können in vorteilhafter Weise bei einer Ausführungsvariante der Erfindung verschiedene Filterstufen eingesetzt werden. Insbesondere empfiehlt es sich auch, zunächst Bestandteile größeren Durchmessers herauszufiltern, damit Feinfilter, die zum Herausfiltern kleiner Partikel vorgesehen sind, nicht zugesetzt werden. Insofern können unterschiedliche Filtrierungen beziehungsweise insbesondere mechanische Filtrierungen nach unterschiedlicher Korngröße hintereinander geschaltet werden. Die Filter können also in Serie geschaltet werden, wobei diese der Korngröße nach angeordnet werden können, und zwar die gröberen Filter zuerst und die feineren Filter anschließend.

Da die im Wasser vorhandenen Partikel Ladungen aufweisen können, können diese somit auch die Leitfähigkeit des Wassers wesentlich bestimmen. Über die Anzahl der Filtrierungsvorgänge kann also auch die elektrische Leitfähigkeit eingestellt werden.

Die Filtrierungsvorgänge können zusätzlich durch die Strömungsrichtungen unterstützt werden. Beispielsweise kann ein Filtermaterial bei einem der Filterungsvorgänge in Abstromrichtung durchflossen beziehungsweise in Schwerkraftrichtung durchflossen werden, während das gefilterte Material wieder in Aufstromrichtung (also entgegen der Schwerkraftrichtung) geleitet wird. Auf diese Wese können sich noch besser Partikel mit größerer Dichte als Wasser am Filtermaterial ablagern und dort verbleiben, ohne dass es zu einem Rückfluss kommt.

Neben rein mechanischen Filtern können bei der zweiten Stufe auch zum Beispiel Biofilter eingesetzt werden. Hierzu eignen sich insbesondere Aktivkohlefilter oder spezialbeschichtete Aktivkohlefilter. Mit Aktivkohlefiltern können verschiedenste Chemikalien, Arzneimittel oder dergleichen herausgefiltert werden.

Bei einem Aktivkohlefilter handelt es sich um ein hoch poröses Filtermaterial, bei dem Stoffe durch Adsorption in den Poren abgelagert werden können. Insbesondere können zum Beispiel folgende Arten von Aktivkohlefiltern eingesetzt werden:
- Filter, die auf Steinkohle in verschiedenen Körnungen und mit verschiedenen Beschichtungen, insbesondere Bedampfungen, basieren;
- Filter auf Kokosnussschalenbasis mit dampfaktiviertem Aktivkohlegranulat;
- Torfkohle-basierte Filter (Formaktivkohle), welche thermisch reaktiviert werden können.

Auf diese Art und Weise kann zum Beispiel die zweite Filterungsstufe dadurch ergänzt werden, dass nicht nur rein mechanisch Partikel ab einer gewissen Größe oder Überstände abgesondert werden könnten, sondern auch noch zum Teil gelöste Bestandteile.

In vorteilhafter Weise kann auch nach der dritten Stufe noch eine mechanische Partikelfilterung durchgeführt werden. Auch hierbei kann es sich insbesondere um eine Feinfiltrierung handeln. Bei der dritten Stufe werden insbesondere durch UV-Entkeimung Organismen abgetötet, die zuvor nicht von den bereits vorhandenen Filtern erfasst wurden. Zum Teil ist es unschädlich, wenn derartige abgetötete Organismen im Wasser verbleiben. Durch eine weitere Partikelfilterung kann jedoch möglicherweise ein Teil der noch vorhandenen Bestandteile herausgefiltert werden und es wird zumindest gewährleistet, dass das Endprodukt keine Bestandteile oberhalb einer gewissen Korngröße enthält.

Denkbar ist grundsätzlich auch, dass abschließend nochmals ein nicht mechanischer Filter eingesetzt wird, beispielsweise auch ein zusätzlicher Aktivkohlefilter.

Insbesondere kann bei der zweiten Stufe auch ein Sandfilter eingesetzt werden, um Schwermetalle, Fluoride, Phosphate oder dergleichen zu entfernen, welche zumindest teilweise im Wasser gelöst sind. Bei einem Sandfilter handelt sich um ein mesoporöses Filtermaterial. Gegebenenfalls können aber auch andere geeignete poröse Filtermaterialien eingesetzt werden. Gerade die Entfernung von Schwermetallen, Fluoriden und Phosphaten spielt bei der derzeitigen Belastung des Wassers und bei der Aufbereitung von Abwässern eine besonders große Rolle. Grundsätzlich können hierbei zur Filterung Ionentauscher eingesetzt werden. Durch den Einsatz mesoporöser Formkörper als Filter können jedoch verschiedene physikalische und chemische Reinigungsmechanismen zusammenspielen, wie beispielsweise Fällung, Adsorption und Fixierung in der Kristallstruktur. Auf diese Weise werden Schwermetallionen und Schwermetallsalze aus wässrigen Medien im Porenkörper festgehalten und somit abgesondert. Grundsätzlich kann es sich bei diesen Filtern um offene oder geschlossene Festbettfilter handeln. Individuell eingestellt werden kann der pH-Wert, der Gehalt an organischen Stoffen beziehungsweise Trübstoffen und die Kontaktzeit, die gegebenenfalls in einem Vorversuch ermittelt werden muss.

Auch beim Betrieb eines Sandfilters können verschiedene Strömungsrichtungen berücksichtigt werden. Das aus Sand bestehende Filterbettmaterial kann von oben beströmt oder besprüht werden. Das gefilterte Wasser kann, wie bereits oben erwähnt, in Aufstromrichtung nach Durchgang durch das Filtermaterial abgezogen werden.

Die Bestrahlung mit UV-Licht kann bei der dritten Stufe auf unterschiedliche Art und Weise erfolgen. Insbesondere kann die zu filternde Flüssigkeit an der entsprechenden Lichtquelle entlang geleitet werden. Um auch bei relativ hohen Durchflussgeschwindigkeiten die Bestrahlungszeit möglichst lang zu wählen, kann das zu filternde Material spiralförmig an der Lichtquelle entlang geleitet werden. Somit muss das zu filternde Wasser, das die entsprechenden Leitungen durchströmt, auf einer möglichst großen Strecke an der Lichtquelle entlang strömen und wird während dieser gesamten Zeit beschienen. Auf diese Art und Weise kann eine sehr effektive Entkeimung erreicht werden. Um gegebenenfalls den Effekt von Sedimentationen noch ermöglichen zu können, kann das Wasser in vertikaler Richtung nach oben beziehungsweise in Aufstromrichtung geleitet werden.

Als ultraviolette Lichtquelle kann bei einer Weiterbildung der Erfindung insbesondere eine Amalgamlampe verwendet werden, welche insbesondere im Wellenlängenbereich von 250nm bis 260nm, besonders bevorzugt bei 253,7nm, abstrahlt. Um die Wegstrecke, auf der die gefilterte Flüssigkeit mit UV-Licht bestrahlt wird, zu vergrößern, kann eine entsprechende Leitung an der UV-Lichtquelle vorbeigeführt werden. Denkbar ist auch, dass ein von einem Lichtkanal durchzogener Tank verwendet wird und der Lichtkanal durch das Füllen des Tanks somit von der zu bestrahlenden Flüssigkeit umspült wird. Durch diese Ausführungsform kann noch mehr Flüssigkeit von der Bestrahlung erfasst werden. Insbesondere dann, wenn die Lichtquelle beziehungsweise der Lichtkanal flüssigkeitsdicht separiert werden kann, ist es wesentlich einfacher, eine ausreichende Bestrahlung der Flüssigkeit, insbesondere einer größeren Menge an Flüssigkeit, technisch zur realisieren.

Um in vorteilhafter Weise eine möglichst autarke Anlage zu realisieren, kann bei einer Ausführungsform der Erfindung zur Energieversorgung eine regenerative Energiequelle verwendet werden, insbesondere eine Photovoltaikanlage beziehungsweise eine Windkraftanlage. Auf diese Art und Weise kann die Wasseraufbereitung zudem auch besonders umweltfreundlich erfolgen; zudem können Energiekosten eingespart werden.

Wie bereits erwähnt, kann das erfindungsgemäße Verfahren nicht nur zur Gewinnung von Biogas, sondern insbesondere auch zur Aufbereitung von Wasser verwendet werden. In vorteilhafter Weise können verschiedene Reinheitsstufen des Wassers, insbesondere sowohl Brauch- als auch Trinkwasser, bis hin zu hochreinem Wasser in Laborqualität realisiert werden.

### Ausführungsbeispiel:

Ein Ausführungsbeispiel der Erfindung ist in den Zeichnungen dargestellt und wird nachstehend unter Angabe weiterer Einzelheiten und Vorteile näher erläutert.

Im Einzelnen zeigt:
- Figur 1: eine schematische Darstellung einer Anlage zur Durchführung des Verfahrens zur Herstellung von Biogas sowie zur Wasseraufbereitung gemäß der Erfindung,
- Figur 2: eine ähnliche Darstellung wie Figur 1, jedoch aus einer anderen Perspektive sowie schräg gestellt,
- Figur 3a, 3b: Darstellungen der Elektrode, welche nach dem Aufstromprinzip durchflossen wird,
- Figur 4: eine schematische Darstellung eines Sandfilters,

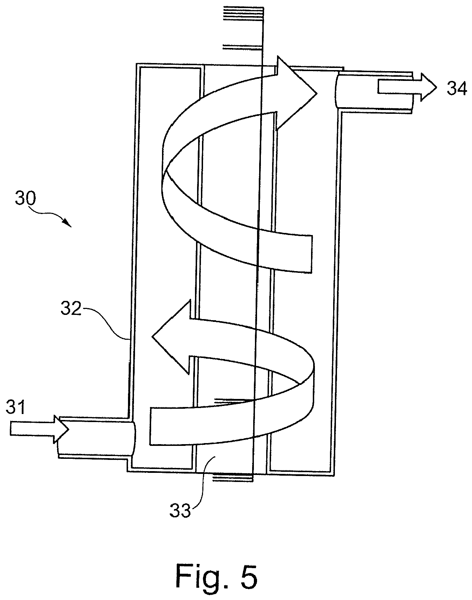

- Figur 5: eine Entkeimungsvorrichtung zur UV-Behandlung der zu filternden Flüssigkeit.

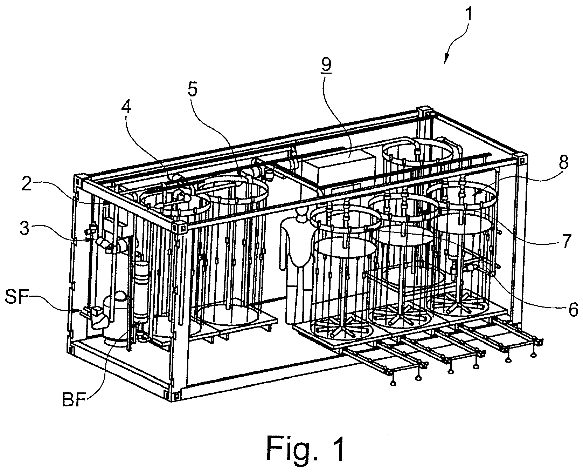

Diese Anlage 1 zur Wasseraufbereitung gemäß Figur 1 umfasst zunächst eine Baugruppe 2 zur Durchführung der Elektrolyse. Zum Transport sind Pumpen 3 vorgesehen. Die Elektrolyseeinheit 2 zur gleichzeitigen Durchführung einer Aufreinigung durch Flotation bildet somit die erste Stufe des Verfahrens gemäß der Erfindung. Als Behälter stehen die Belegungstanks 4, 5 zur Verfügung. Anschließend ist ein Sandfilter SF und ein Beutelfilter BF zu passieren.

Das so gewonnene und zunächst filtrierte Wasser kann für die zweite Stufe an eine Filtereinrichtung abgegeben werden. Diese Filtereinrichtung umfasst drei Einzelfilter 6, 7, 8. Diese dienen insbesondere der mechanischen Filterung. Das nach der Filterung verbliebene Wasser kann in einen sogenannten Reinwassertank eingeleitet werden. Die Steuerung ist durch das Bezugszeichen 9 gekennzeichnet.

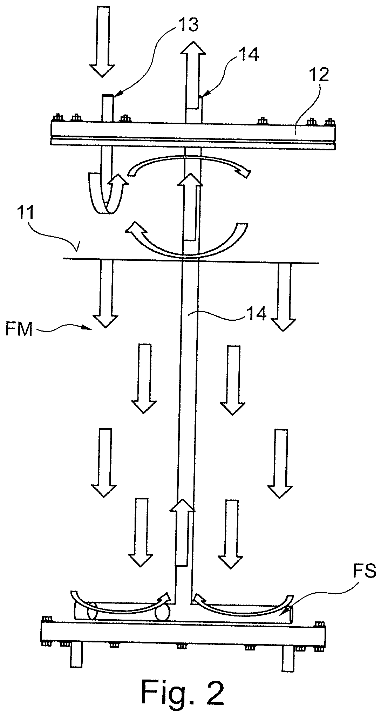

Zu den Wechselfiltern ist ein Filterbehälter 11 vorgesehen (vgl. Figur 2), der nach oben hin luftdicht abgeschlossen ist. Es erfolgt ein Zulauf 13 über den Deckel 12 des Behälters 11. Das Wasser wird dabei zuerst durch das Filtermaterial FM nach unten geleitet und gelangt dort auf eine sternförmige Anordnung eines Filters FS, das heißt die Transportrichtung verläuft in Abstromrichtung. Das gefilterte Wasser wird in Aufstromrichtung durch einen zentralen Ablaufkanal 14 wiederum abgesaugt.

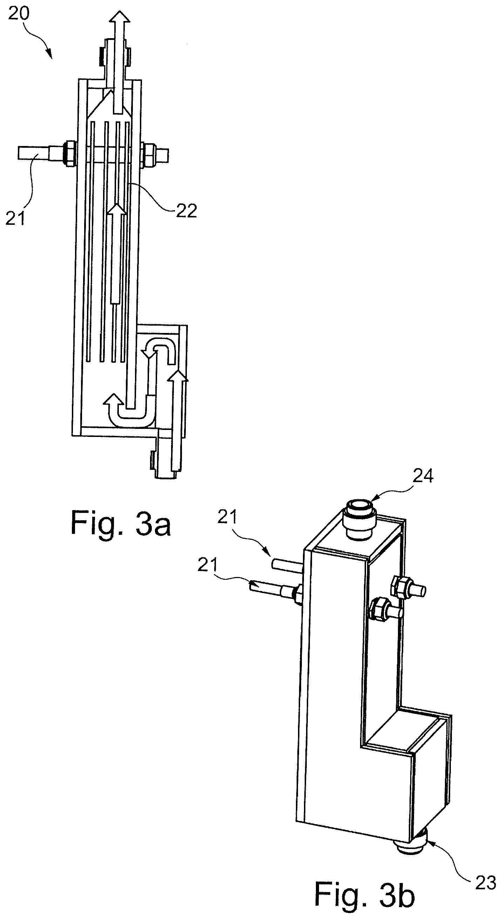

In Figur 3a ist eine Vorrichtung 20 zur Durchführung der Elektrolyse dargestellt. Die Spannung kann über die Elektroden 21 (jeweils Anode bzw. Kathode) angelegt werden. Zur Oberflächenvergrößerung sind Platten bzw. Lamellen 22 vorgehen. Die Vorrichtung 20 wird in Pfeilrichtung (in Aufstromrichtung) zwischen Zulauf 23 und Ablauf 24 durchflossen (Figur 3b).

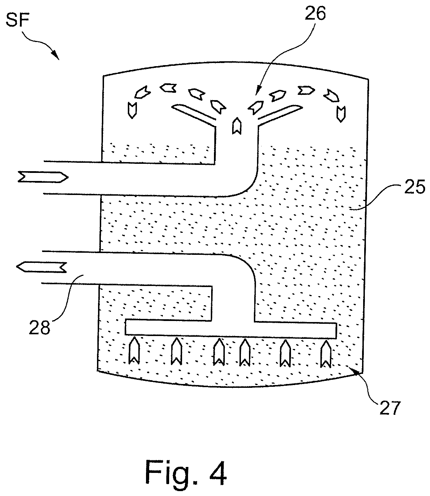

Der mesoporöse Sandfilter SF kann, wie in Figur 4 dargestellt, wie folgt skizziert werden: Ein Filterbett 25 aus Sand kann von oben mit der zu filternden Flüssigkeit über den Auslass 26 berieselt werden. Die Flüssigkeit sickert durch den Sand hindurch und gelangt somit in den in Schwerkraftrichtung unteren Bereich dieser Filtereinrichtung 27. Dort wird die entsprechende Flüssigkeit abgesaugt, und zwar über einen Ausgang 28, wobei die Flüssigkeit wiederum in Aufstromrichtung, also entgegen Schwerkraftrichtung, abgesaugt wird. Beim Rückspülen zur Abreinigung von Ablagerungen kann diese Strömungsrichtung umgekehrt werden.

Die Flüssigkeit wird im unteren Bereich der Entkeimungsvorrichtung 30 über einen Zulauf 31 eingeleitet und gelangt dort in einen Behälter 32. Durch die Mittenachse des Behälters 32 ist ein Lichtkanal 33 für UV-Licht vorgesehen: Hier wird über eine Amalgamlampe (135 W) UV-Licht der Hauptwellenlänge 253,7 nm eingestrahlt, wobei der Lichtkanal 33 eine für UV-Licht durchlässige Wandung besitzt. Die Flüssigkeit kann somit die Lichtquelle 33 umspülen und gelangt oben schließlich wieder durch den Ablauf 34 hinaus.

Es existieren verschiedene Einsatzbereiche, in denen Ausführungsformen der Erfindung eingesetzt werden können: Zunächst ist hier die Grundwassersanierung zu nennen. Darüber hinaus finden sicher aber auch Einsatzbereiche in der Altlastensanierung, beispielsweise der Deponiesickerwasseraufbereitung oder im Zusammenhang mit Bodenwaschanlagen. Ein sehr weit gefasster Anwendungsbereich ist auch die Aufbereitung gewerblicher Abwässer, vor allem in der Metall produzierenden Industrie oder im Zusammenhang mit Stahlwerken sowie der Galvanik oder der Glasindustrie. Es finden sich aber auch Anwendungen im Zusammenhang mit der Trinkwasseraufbereitung und Aquaristik, darüber hinaus mit Spezialgebieten wie der Seesanierung oder der Regenablaufwassersanierung bei Metalldächern. Insbesondere eignen sich die vorgeschlagenen Anlagen zur Durchführung des Verfahrens auch dazu, als mobile Anlagen eingesetzt zu werden.

### Bezugszeichenliste:

- 1: Wasseraufbereitungsanlage
- 2: Elektrolysekammer
- 3: Pumpen
- 4, 5: Belebungstanks
- 6, 7, 8: Wechselfilter
- 9: Steuerung (Kontrolleinheit)
- 11: Filtertank
- 12: Deckel
- 13: Zulauf
- 14: Ablauf
- 20: Elektrolyseur
- 21: Elektroden
- 23: Zulauf
- 24: Ablauf
- 25: Sand
- 26: Auslass zur Berieselung
- 27: unterer Teil des Filterbetts
- 28: Ausgang
- 30: Entkeimungsvorrichtung
- 31: Zulauf
- 32: Gehäuse
- 33: Lichtkanal
- 34: Ablauf

- BF: Beutelfilter
- FM: Filtermaterial
- FS: Filterstern
- SF: Sandfilter

## Patentansprüche

1. Verfahren zur Herstellung von Biogas, wobei als Ausgangsflüssigkeit eine aufzubereitende, wasserhaltige Flüssigkeit aus gewerblichen Abwässern oder aus Rückständen einer Altlastensanierung, insbesondere Gülle, verwendet wird, **dadurch gekennzeichnet, dass**, die folgenden Verfahrensstufen durchlaufen werden:
• eine erste Stufe, bei der an der aufzubereitenden Flüssigkeit eine Elektrolyse (2) mit elektrochemischer Oxidation wasserlöslicher, abzusondernder Bestanteile und zur Erzeugung von Flotationsgasen durchgeführt wird,
• eine sich an die erste Stufe anschließende zweite Stufe, bei der eine Filterung (6, 7, 8, SF, BF) zur Absonderung ausgeflockter und/oder unlöslicher Bestandteile, insbesondere edelmetallhaltiger Bestandteile durchgeführt wird,
• eine sich an die zweite Stufe anschließende dritte Stufe, bei der eine Bestrahlung mit ultraviolettem Licht (30) zur Desinfektion mit einer Partikelfilterung durchgeführt wird.

2. Verfahren nach einem der vorgenannten Ansprüche, **dadurch gekennzeichnet, dass** bei der elektrochemischen Oxidation wenigstens eine Bor-dotierte Diamantelektrode verwendet wird.

3. Verfahren nach einem der vorgenannten Ansprüche, **dadurch gekennzeichnet, dass** die elektrochemische Oxidation zur Ausflockung der abzusondernden. Bestanteile verwendet wird.

4. Verfahren nach einem der vorgenannten Ansprüche, **dadurch gekennzeichnet, dass** bei der zweiten Stufe ein wenigstens teilweise selbstreinigender Filter zur Filterung verwendet wird.

5. Verfahren nach einem der vorgenannten Ansprüche, **dadurch gekennzeichnet, dass** bei der zweiten Stufe wenigstens zwei Filterungsvorgänge hintereinandergeschaltet werden.

6. Verfahren nach einem der vorgenannten Ansprüche, **dadurch gekennzeichnet, dass** bei der zweiten Stufe ein Filtermaterial bei einem der Filterungsvorgänge in Abstromrichtung und in Schwerkraftrichtung durchflossen und nach dem Filterungsvorgang die gefilterte Flüssigkeit in Aufstromrichtung weitergeleitet wird.

7. Verfahren nach einem der vorgenannten Ansprüche, **dadurch gekennzeichnet, dass** bei der zweiten Stufe wenigstens ein Aktivkohlefilter, insbesondere mit Steinkohle und/oder auf Kokosnussschalenbasis und/oder mit Torfkohle, verwendet wird.

8. Verfahren nach einem der vorgenannten Ansprüche, **dadurch gekennzeichnet, dass** bei der dritten Stufe eine mechanische Partikelfilterung durchgeführt wird.

9. Verfahren nach einem der vorgenannten Ansprüche, **dadurch gekennzeichnet, dass** bei der zweiten Stufe zur Entfernung von Schwermetallen, Fluoride und Phosphaten ein poröses Filtermaterial, insbesondere ein mesoporöses Filtermaterial verwendet wird, vorzugsweise Sand.

10. Verfahren nach einem der vorgenannten Ansprüche, **dadurch gekennzeichnet, dass** bei der dritten Stufe die zu filternde Flüssigkeit an einer Lichtquelle (33) entlang geleitet wird, insbesondere spiralförmig um eine Lichtquelle (33) herum.

11. Verfahren nach einem der vorgenannten Ansprüche, **dadurch gekennzeichnet, dass** als ultraviolette Lichtquelle (33) eine Amalgamlampe verwendet wird, die insbesondere im Hauptwellenlängenbereich von 250 nm bis 260 nm, vorzugsweise bei 253,7 nm abstrahlt.

12. Verfahren nach einem der vorgenannten Ansprüche, **dadurch gekennzeichnet, dass** zur Bestrahlung mit ultraviolettem Licht ein von einem Lichtkanal (33) durchzogener Tank (32) verwendet wird, und der Lichtkanal (33) von der zu bestrahlenden Flüssigkeit umspült wird.

13. Verfahren nach einem der vorgenannten Ansprüche, **dadurch gekennzeichnet, dass** zur Energieversorgung eine regenerative Energiequelle verwendet wird, insbesondere eine Photovoltaikanlage und/oder eine Windkraftanlage.

14. Verwendung eines Verfahrens nach einem der vorgenannten Ansprüche zur Aufbereitung von Wasser, insbesondere zur Gewinnung von Brauch- und/oder Trinkwasser.
